# EUROPEAN PATENT APPLICATION

(11) **EP 4 674 542 A1**
(43) Date of publication of application: **07.01.2026**
(21) Application number: 23934779.2
(22) Date of filing: 05.07.2023
(51) Int. Cl.: B21B 1/38, B21B 47/00, B21B 45/00, B21B 37/74, B21B 45/02

(54) **STAINLESS STEEL COMPOSITE PANEL HAVING EXCELLENT INTERFACE BONDING AND PREPARATION METHOD THEREFOR**

(30) Priority: 25.04.2023 CN 202310451443
(71) Applicant: Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN); Jiangsu Shagang Steel Co., Ltd., Suzhou, Jiangsu 215625 (CN)
(72) Inventor: ZHEN, Fan, Suzhou, Jiangsu 215625 (CN); QU, Jinbo, Suzhou, Jiangsu 215625 (CN); MA, Han, Suzhou, Jiangsu 215625 (CN); SHAO, Chunjuan, Suzhou, Jiangsu 215625 (CN); YANG, Hao, Suzhou, Jiangsu 215625 (CN); ZHENG, Chuanbo, Suzhou, Jiangsu 215625 (CN); LI, Xiaobing, Suzhou, Jiangsu 215625 (CN); ZHANG, Chao, Suzhou, Jiangsu 215625 (CN)
(74) Representative: Gille Hrabal Partnerschaftsgesellschaft mbB Patentanwälte
(86) International application number: PCT/CN2023/105903
(87) International publication number: WO 2024/221604

(57) **Abstract**

The present invention discloses a stainless steel clad plate with excellent interface bonding and a preparation method thereof. In a rolling process of the method, n passes of transverse rolling are performed and then longitudinal rolling is performed, a reduction of a first pass is ≥25mm and a temperature is ≥1060°C, a target width is reached at an n-th pass, a temperature of the n-th pass is ≥1030°C; after the n-th pass and an (n+2)th pass, water-cooling is performed back and forth once in 6 groups of cooling headers, cooling water amounts of an upper header and a lower header are 120~180m³/h and 160~220m³/h respectively, and a roller table speed is 0.8~1.2m/s; reductions of passes from an (n+1)th pass to an (n+3)th pass are all ≥40mm, and a temperature of the (n+1)th pass is ≥950°C; up to an m-th pass, a temperature is ≥900°C, reaching 2.5~3.5 times a target thickness of a large clad plate; after that, performing water cooling, until a surface temperature of a slab is reduced to below 840°C; and then performing a second stage of rolling, a temperature of a first pass and a last pass of the stage is 810°C~840°C and 780~810°C.

## Description

### TECHNICAL FIELD

The present invention belongs to a technical field of steel material preparation, and relates to a stainless steel clad plate with excellent interface bonding and a preparation method thereof.

### BACKGROUND

A stainless steel clad plate is a composite material with a stainless steel as a cladding layer and a carbon steel or a low alloy steel as a base layer, which are combined into one body through a specific process method. The stainless steel clad plate not only has a corrosion resistance of the stainless steel cladding layer, but also has outstanding mechanical properties and price advantages of the carbon steel base layer, and is an important development direction of a steel material. In addition, during use of the stainless steel clad plate, there are also requirements for a bonding performance (a shear strength, a bonding rate) of a bonding interface between the base layer and the cladding layer, and the quality of the interface bonding performance seriously affects a quality of an engineering applying the stainless steel clad plate.

However, in currently known production technologies of a stainless steel clad plate, such as patent technologies with Chinese publication numbers of CN105945067A and CN111530927A, a basic preparation method of a clad plate is disclosed therein, an interface bonding performance is not concerned, and a process means for improving the interface bonding performance is not disclosed in a prior art.

### SUMMARY

An object of the present invention is to provide a stainless steel clad plate with excellent interface bonding and a preparation method thereof.

To achieve the above inventive object, an embodiment of the present invention provides a preparation method of a stainless steel clad plate with excellent interface bonding, the method comprising the following steps:
preparing a composite slab with a thickness t by preparing steel blanks, coating release agent, assembling blanks, seal welding, vacuumizing, and sealing; the composite slab comprises an upper base material, a lower base material, an intermediate cladding material, and a four-sided frame sealing the intermediate cladding material between the upper base material and the lower base material;
heating the composite slab in a heating furnace according to a five-stage mode of a preheating stage, a first heating stage, a second heating stage, a third heating stage and a soaking stage, a temperature of the preheating stage is ≤850°C, a temperature of the first heating stage is 1080±30°C, a temperature of the second heating stage is 1160±30°C, a temperature of the third heating stage is 1220±20°C, a temperature of the soaking stage is 1190±20°C, a residence time of the third heating stage is (0.25~0.35)×t min/mm, and a residence time of the soaking stage is 15min~30min;
rolling the composite slab from the heating furnace to obtain a large clad plate; during an entire rolling process, transverse rolling is adopted for first n passes, and longitudinal rolling is adopted since the (n+1)th pass, and, a rolling reduction of the first pass is ≥25mm and a rolling temperature of the first pass is ≥1060°C, a width of a slab obtained from rolling of a n-th pass is Wt + 0~40mm, Wt is a target width of the large clad plate, and a rolling temperature of the n-th pass is ≥1030°C; between the n-th pass and the (n+1)th pass, and between a (n+2)th pass and a (n+3)th pass, water-cooling the slab back and forth once in 6 groups of headers, a cooling water amount of an upper header and an lower header of each group of headers is 120~180m³/h and 160~220m³/h, and a roller table speed is 0.8~1.2m/s; rolling reductions from the (n+1)th pass to a (n+3)th pass are all ≥40mm, and a rolling temperature of the (n+1)th pass is ≥950°C; up to an m-th pass, a rolling temperature is ≥900°C, and rolling is carried out until a slab thickness reaches 2.5~3.5 times a target thickness of the large clad plate, then performing water cooling until a surface temperature of the slab is reduced to below 840°C; and then performing a second stage of rolling until the slab thickness is the target thickness of the large clad plate, to complete the entire rolling process, a rolling temperature of a first pass and a last pass of the second stage of rolling is 810°C~840°C and 780~810°C;
cooling, cutting, and straightening the obtained large clad plate to obtain a stainless steel clad plate product.

To achieve the above inventive object, an embodiment of the present invention provides a stainless steel clad plate with excellent interface bonding, a shear strength of a bonding interface of the stainless steel clad plate is ≥360MPa, and during a preparation process of the stainless steel clad plate, a composite slab composed of an upper base material, a lower base material, and an intermediate cladding material is heated, and then rolled into a large clad plate;
in a rolling process, transverse rolling is adopted for first n passes, and longitudinal rolling is adopted since the (n+1)th pass, and, a rolling reduction of the first pass is ≥25mm and a rolling temperature of the first pass is ≥1060°C, a width of a slab obtained from rolling of a n-th pass is Wt + 0~40mm, Wt is a target width of the large clad plate, and a rolling temperature of the n-th pass is ≥1030°C; between the n-th pass and the (n+1)th pass, and between a (n+2)th pass and a (n+3)th pass, water-cooling the slab back and forth once in 6 groups of headers, a cooling water amount of an upper header and an lower header of each group of headers is 120~180m³/h and 160~220m³/h, and a roller table speed is 0.8~1.2m/s; rolling reductions from the (n+1)th pass to a (n+3)th pass are all ≥40mm, and a rolling temperature of the (n+1)th pass is ≥950°C; up to an m-th pass, a rolling temperature is ≥900°C, and rolling is carried out until a slab thickness reaches 2.5~3.5 times a target thickness of the large clad plate, then performing water cooling until a surface temperature of the slab is reduced to below 840°C; and then performing a second stage of rolling until the slab thickness is the target thickness of the large clad plate, to complete an entire rolling process, a rolling temperature of a first pass and a last pass of the second stage of rolling is 810°C~840°C and 780~810°C.

Compared with a prior art, a beneficial effect of the present invention is: by preparing the composite slab, and improving a heating and rolling technology of the composite slab, on the one hand, a temperature uniformity of the composite slab is ensured, and on the other hand, an effective penetration of a core part of the composite slab is guaranteed, and thus, not only it can be ensured that own advantages of a base material and a cladding material can be exerted, but also more importantly, an excellent bonding strength of a bonding interface between the base material and the cladding material can be ensured.

### BRIEF DESCRIPTION OF THE DRAWINGS

For clear demonstration and illustration, in various diagrams of the present invention, certain dimensions of a structure or a part are enlarged relative to another structure or another part, therefore, the diagrams are only used to illustrate a basic structure of a subject matter of the present invention.
FIG. 1 is a schematic cross-sectional view of a steel blank used in a preparation method according to an embodiment of the present invention;
FIG. 2 is a schematic cross-sectional view of a composite slab of the preparation method according to an embodiment of the present invention; the cross-section is perpendicular to a length direction of the composite slab;
FIG. 3 is another schematic cross-sectional view of the composite slab of the preparation method according to an embodiment of the present invention; the cross-section is perpendicular to a thickness direction of the composite slab;
FIG. 4 is a schematic cross-sectional view of a clad plate obtained by the preparation method according to an embodiment of the present invention.

### DETAILED DESCRIPTION

An embodiment of the present invention provides a preparation method of a stainless steel clad plate, which is used for preparing a single-sided stainless steel clad plate composed of a carbon steel base layer and a stainless steel cladding layer, so that an obtained stainless steel clad plate has an excellent interface bonding performance, that is, a strength of a bonding interface between the base layer and the cladding layer is excellent.

The preparation method comprises processes such as preparing steel blanks, coating release agent, assembling blanks, seal welding, vacuumizing, sealing, heating, rolling, cooling, cutting, and straightening. Specifically:
preparing a composite slab with a thickness t by preparing steel blanks, coating release agent, assembling blanks, seal welding, vacuumizing, and sealing; the composite slab comprises an upper base material, a lower base material, an intermediate cladding material, and a four-sided frame sealing the intermediate cladding material between the upper base material and the lower base material;
heating the composite slab in a heating furnace according to a five-stage mode of a preheating stage, a first heating stage, a second heating stage, a third heating stage and a soaking stage, a temperature of the preheating stage is ≤850°C, a temperature of the first heating stage is 1080+30°C, a temperature of the second heating stage is 1160+30°C, a temperature of the third heating stage is 1220+20°C, a temperature of the soaking stage is 1190+20°C, a residence time of the third heating stage is (0.25~0.35)×t min/mm, and a residence time of the soaking stage is 15min~30min;
rolling the composite slab from the heating furnace to obtain a large clad plate; during an entire rolling process, transverse rolling is adopted for first n passes, and longitudinal rolling is adopted since the (n+1)th pass, and, a rolling reduction of the first pass is ≥25mm and a rolling temperature of the first pass is ≥1060°C, a width of a slab obtained from rolling of an n-th pass is Wt + 0~40mm, Wt is a target width of the large clad plate, and a rolling temperature of the n-th pass is ≥1030°C; between the n-th pass and the (n+1)th pass, and between a (n+2)th pass and a (n+3)th pass, water-cooling the slab back and forth once in 6 groups of headers, a cooling water amount of an upper header and an lower header of each group of headers is 120~180m³/h and 160~220m³/h, and a roller table speed is 0.8~1.2m/s; rolling reductions from the (n+1)th pass to a (n+3)th pass are all ≥40mm, and a rolling temperature of the (n+1)th pass is ≥950°C; up to an m-th pass, a rolling temperature is ≥900°C, and rolling is carried out until a slab thickness reaches 2.5~3.5 times a target thickness of the large clad plate, then performing water cooling until a surface temperature of the slab is reduced to below 840°C; and then performing a second stage of rolling until the slab thickness is the target thickness of the large clad plate, to complete the entire rolling process, wherein a rolling temperature of a first pass and a last pass of the second stage of rolling is 810°C~840°C and 780~810°C;
cooling, cutting, and straightening the obtained large clad plate to obtain a stainless steel clad plate product.

Thus, in an embodiment of the present invention, by preparing the composite slab, and by using the above heating and rolling technology for the composite slab, especially a complete scheme for the rolling process, on the one hand, a temperature uniformity of the composite slab is ensured, and on the other hand, an effective penetration of a core part of the composite slab is guaranteed, and thus, not only it can be ensured that own advantages of a base material and a cladding material can be exerted, but also more importantly, an excellent bonding strength of a bonding interface between the base material and the cladding material can be ensured.

In a preferred embodiment, a rolling reduction of the (n+2)th pass is ≥42mm.

More preferably, the cooling water amount of the upper header and lower header of each group of headers is 150m³/h and 200m³/h, and the roller table speed is 1m/s.

In a preferred embodiment, in the composite slab obtained in a step of "preparing a composite slab with a thickness t by preparing steel blanks, coating release agent, assembling blanks, seal welding, vacuumizing, and sealing":
the intermediate cladding material comprises two cladding materials arranged in a stacked manner, that is, one base material, one cladding material, another cladding material, and another base material are arranged in sequence from top to bottom;
the four-sided frame comprises a sealing strip surrounding four side edges of the intermediate base material, and a surfacing-welded filling layer located in a groove enclosed by the upper base material, the lower base material and the sealing strip.

A preparation process of a composite slab in a preferred embodiment of the present invention will be described in detail below.

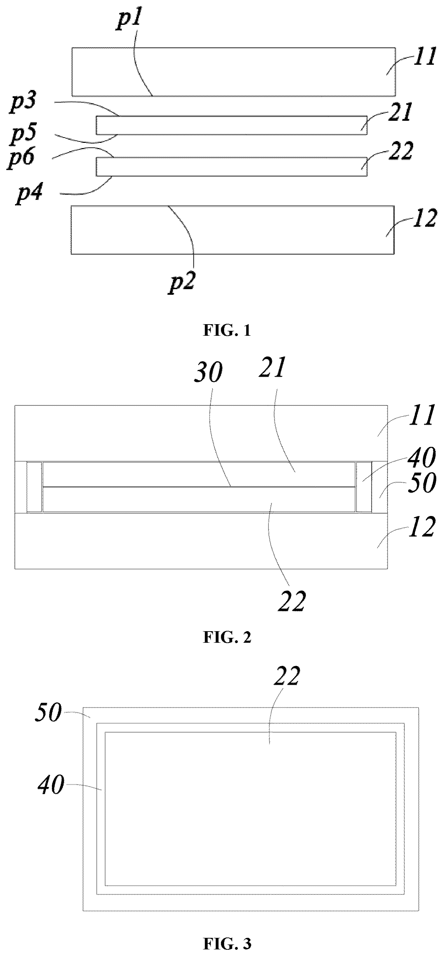

Wherein, the process of preparing steel blanks comprises: preparing two carbon steel blanks with a length L1 and a width W1 as two base materials, as a base material 11 and a base material 12 shown in FIG. 1. The base material 11 and the base material 12 have a same length L1, and a same width W1; in addition, a thickness of the base material 11 and a thickness of the base material 12 can be set to be the same or different, and if set to be different thicknesses, stainless steel clad plates with different thickness specifications can be prepared accordingly.

The process of preparing steel blanks also comprises: preparing two stainless steel blanks with a length L2 and a width W2 as two cladding materials, as a cladding material 21 and a cladding material 22 shown in FIG. 1. The cladding material 21 and the cladding material 22 have a same length L2, and a same width W2; in addition, a thickness of the cladding material 21 and a thickness of the cladding material 22 can be set to be the same or different, and if set to be different thicknesses, stainless steel clad plates with different thickness specifications can be prepared accordingly.

Further preferably, both length and width of the base material 11 and the base material 12 are greater than length and width of the cladding material 21 and the cladding material 22, that is, L1>L2, W1>W2.

And more preferably, L1=L2+90~150mm, W1=W2+90~150mm. That is to say, the length of each base material is 90~150mm greater than the length of each cladding material, and the width of each base material is 90~150mm greater than the width of each cladding material. Thus, a dimension of the four-sided frame in the prepared composite slab can be ensured, thereby guaranteeing a sealing performance of the composite slab, so as to improve an interface bonding quality.

It can be understood that, the cladding material and the base material prepared in the process of preparing steel blanks are finally converted into a cladding layer and a base layer of an obtained stainless steel clad plate after the preparation method. Therefore, in the accompanying drawings, a same reference numeral is used for the cladding material and the cladding layer, and a same reference numeral is also used for the base material and the base layer.

Further preferably, the process of preparing steel blanks also comprises: subjecting a to-be-cladded surface of each base material and each cladding material to a grinding and polishing treatment, so as to remove a surface oxide scale and expose a metallic luster. After the grinding and polishing treatment, a surface roughness Ra of the to-be-cladded surface is <5µm. Thus, through the grinding and polishing, these surfaces after being ground and polished are in contact with each other as a to-be-cladded surface in a subsequent blank assembling, thereby improving an interface bonding strength of the finally obtained stainless steel clad plate.

In the present application, the "to-be-cladded surface" refers to a surface where the base material and the cladding material need to be interface-bonded when forming a clad plate.

Specifically, referring to FIG. 2, for example, for the base material 11, the base material 12, the cladding material 21 and the cladding material 22, any one of two surfaces in a thickness direction can be selected as the "to-be-cladded surface" to be subjected to the grinding and polishing treatment, such as a surface p1 of the base material 11, and a surface p2 of the base material 12, which can be specifically ground and polished by using a grinding wheel machine, a belt sander or a milling machine, and such as a surface p3 of the cladding material 21 and a surface p4 of the cladding material 22, which can be specifically ground and polished by using a wire wheel.

It can be understood that after the surface grinding treatment, each base material and each cladding material are both an equal-thickness blank.

Here, only the grinding and polishing treatment on the to-be-cladded surface of each base material and each cladding material is described, and it should be noted that, other surfaces of each base material and each cladding material can be further subjected to a grinding and polishing treatment, although such an additional grinding and polishing treatment on the other surfaces is not necessary for realizing a technical effect of the present invention, but may be more preferable.

As a preferred solution, the two cladding materials are preferably austenitic stainless steels. A chemical composition thereof is, in mass percentage: C≤0.15%, Si≤1.00%, Mn≤2.00%, P≤0.045%, S≤0.030%, Ni: 6.0~22.0%, Cr: 16.0~26.0%, Mo≤3.0%, and a balance being Fe and an unavoidable impurity. By using a stainless steel blank with the chemical composition, under a circumstance of the foregoing technical effect, a performance of the clad plate, especially a corrosion resistance of the cladding layer can be further guaranteed, for example, the cladding layer (i.e., obtained by rolling the cladding material) of the obtained clad plate is boiled in a sulfuric acid-copper sulfate solution for 20h, and after being bent by 180°, has no intergranular corrosion crack.

Here, it should be noted that, chemical compositions of the two cladding materials may be the same or different, and only one of the two may adopt the chemical composition provided by the above preferred solution, or both may adopt or not adopt the chemical composition provided by the above preferred solution.

As a preferred solution, the two base materials are preferably carbon steels for a bridge structure, and a chemical composition thereof is, in mass percentage: C: 0.03~0.16%, Si: 0.11~0.29%, Mn: 1.31~1.54%, P≤0.018%, S≤0.0030%, Cr: 0.06~0.29%, Nb: 0.011~0.034%, Ti: 0.011~0.019%, Al: 0.030~0.040%, and a balance being Fe and an unavoidable impurity.

More preferably, the chemical composition of the base material may further comprise one or two or all of Ni: 0.06~0.14%, Mo: 0.11~0.19%, and Cu: 0.16~0.24% in mass percentage.

Herein, chemical compositions of the two base materials may be the same or different, and only one of the two base materials may adopt the chemical composition provided by the above preferred solution, or both may adopt or not adopt the chemical composition provided by the above preferred solution.

In a further preferred embodiment, the process of coating release agent specifically comprises: coating a release agent on a non-to-be-cladded surface of at least one cladding material. In the present application, the "non-to-be-cladded surface" refers to a surface that does not need to be interface-bonded when forming the clad plate. For example, a surface p5 of the cladding material 21 and a surface p6 of the cladding material 22 are both the "non-to-be-cladded surface".

Specifically, the release agent may be coated on the non-to-be-cladded surface of each cladding material, or one of the two cladding materials may be selected to be coated with the release agent. Thus, by means of the release agent, contact surfaces (i.e., the non-to-be-cladded surfaces) of the two cladding materials are prevented from being bonded in the subsequent composite slab rolling step, thereby avoiding difficulty in final separation.

A first embodiment of the release agent is: a coating liquid containing a silicon oxide and a magnesium oxide, wherein a mass ratio of the silicon oxide to the magnesium oxide is 3:1.

The release agent of this embodiment can achieve a good isolation effect and ensure a subsequent separation of two small clad plates. By using the release agent, a total amount of an release agent 30 (referring to FIG. 2) between the two cladding materials is 18~22y mg/m², preferably 20y mg/m², where y is a ratio of a total thickness of the composite slab obtained in the sealing process to a thickness of the large clad plate formed by rolling, and the ratio is also called a composite slab rolling compression ratio. In a preferred embodiment in which a base material 11, a cladding material 21, a cladding material 22 and a base material 12 in the composite slab are sequentially stacked, a total thickness of the composite slab is a sum of thicknesses of the two base materials and the two cladding materials. After the coating of the release agent is completed and before a subsequent assembling blanks process, the cladding material coated with the release agent is placed in a trolley furnace for heating and drying, a drying temperature is 340~360°C, and a drying time is 35~45min.

A second embodiment of the release agent is: a composition is, by weight ratio, 25~35% of a silicon nitride + 5~10% of a thermosetting amino resin + 55~70% of a water. Compared with an existing release agent, and even compared with the first embodiment of the release agent, the release agent of the present embodiment not only can achieve a good isolation effect and ensure a subsequent separation of two small clad plates, but also an effective component silicon nitride has a strong chemical stability and a high temperature resistance and a thermal shock resistance, a thermosetting amino resin used as a binder can be cured at a low temperature, is nontoxic, and can achieve a strong bonding effect with a very small amount, therefore the release agent is low-cost on the whole, simple in operation, and good in isolation and adhesion effects.

Here, a preferred preparation method of the release agent of the second embodiment is provided, comprising: first placing 5~10% of a silicon nitride (by weight percentage) in a container such as a beaker, and then pouring 15~25% of water for stirring; after the silicon nitride has no particulate feeling and no air bubble, pouring 2~3% of a thermosetting amino resin and continuing stirring; when a viscous state is presented, continuing to pour a remaining silicon nitride and a remaining water, stirring for 3~5min, and then pouring a remaining thermosetting amino resin; and when stirring to a viscous state, the release agent is prepared.

For the release agent of the second embodiment, an release agent 30 (referring to FIG. 2) between two cladding materials is coated to a total thickness of 0.2~0.5mm; after the coating of the release agent is completed, and before a subsequent assembling blanks process, the cladding material coated with the release agent is heated and dried, a drying temperature is 100~250°C, and a drying time is 20~40min.

As described above, for the first embodiment and the second embodiment of the release agent, if the release agent is coated on both surface p5 and surface p6, an amount of the release agent coated on each of the surface p5 and the surface p6 may be half of a total amount/total thickness; and if the release agent is coated on only one of the surface p5 and the surface p6, the release agent is coated according to the total amount/total thickness.

In a further preferred embodiment, the process of assembling blanks comprises: assembling blanks in a manner that the cladding material 21 and the cladding material 22 are in a middle, the base material 11 is stacked on an upper side, the base material 12 is stacked on a lower side, and the sealing strip surrounds four side edges of the cladding material 21 and the cladding material 22, and welding is performed between an upper edge of the sealing strip (referable to a reference numeral 40 in FIG. 2) and the base material 11, and between a lower edge of the sealing strip 40 and the base material 12, so as to form a composite slab base blank.

Further preferably, the base material 11, the cladding material 21, the cladding material 22, the base material 12, and the sealing strip 40 are arranged as a whole as follows:
referring to FIG. 1 and FIG. 2, the base material 11, the cladding material 21, the cladding material 22, and the base material 12 are sequentially stacked from top to bottom; wherein, surfaces of a base material and a cladding material which are in contact with each other are both the to-be-cladded surface subjected to the foregoing grinding and polishing treatment, for example, the surface p2 of the base material 12 and the surface p4 of the cladding material 22 are in contact with each other, and the surface p1 of the base material 11 and the surface p3 of the cladding material 21 are in contact with each other; and, a surface of the cladding material coated with the release agent faces another cladding material, and one of the surface p6 of the cladding material 22 and the surface p5 of the cladding material 21 is coated with the release agent 30; herein, it should be noted that, for ease of understanding and illustration, in FIG. 2, a thickness dimension of the release agent 30 between two cladding materials is shown in an enlarged manner, that is, a ratio of an illustrated thickness of the release agent to the thickness of the base materials, the thickness of a cladding materials, and the width of the sealing strip mentioned later is enlarged;
and, referring to FIG. 3, the sealing strip 40 is wrapped around four side edges of the cladding material 21 and the cladding material 22.

During a specific implementation, a base material 11, a base material 12, a cladding material 21, and a cladding material 22 may be stacked first, then a sealing strip 40 is wrapped around four side edges of the cladding material 21 and the cladding material 22, and finally welding is performed between an upper edge of the sealing strip 40 and a surface p1 of the base material 11 and between a lower edge of the sealing strip 40 and a surface p2 of the base material 12. Of course, in a varied embodiment, welding may be performed between a lower edge of a sealing strip 40 and a surface p2 of a base material 12 first, the sealing strip 40 forms a quadrangular surrounding frame on the surface p2 of the base material 12, then the cladding material 22 and the cladding material 21 are sequentially placed in the surrounding frame, then the base material 11 covers the cladding material 21 and the surrounding frame, and finally welding is performed between an upper edge of the sealing strip 40 and the surface p1 of the base material 11. And, in a further varied embodiment, welding may be performed between an upper edge of the sealing strip 40 and the surface p1 of the base material 11, then the base material 12, the cladding material 22, and the cladding material 21 are sequentially stacked from bottom to top, then the combined sealing strip 40 and base material 11 are covered on and around the cladding material 21 and the cladding material 22, and finally welding is performed between a lower edge of the sealing strip 40 and the surface p2 of the base material 12. These embodiments do not depart from a technical principle of the present invention.

Preferably, between the upper edge of the sealing strip 40 and the base material 11 and between the lower edge of the sealing strip 40 and the base material 12, welding is performed by a gas shielded welding. A welding current during the gas shielded welding is 220~240A, a welding voltage is 28~32V, a welding speed is 300~360mm/min, and an interpass temperature is controlled at 140~160°C.

In addition, before the gas shielded welding is performed, the base material 11 and the base material 12 are preferably preheated and baked by a flame gun respectively, and a baking temperature is 150~250°C.

Further, after the upper base material, the lower base material, and the intermediate cladding material are stacked, a four-column hydraulic machine is used to pressurize back-to-back surfaces of two base materials, and a pressure is ≥500 tons.

Further, regarding a dimension of the sealing strip 40, a width W3 of the sealing strip 40 is a sum of thicknesses of the cladding material 21 and the cladding material 22 or is slightly smaller than the sum of the thicknesses of the two within 2mm, and a thickness T3 of the sealing strip 40 is 12~15mm. Preferably, the sealing strip 40 on four side edges of the composite slab base blank has a same width W3 and a same thickness T3. In addition, at a long side edge of the composite slab base blank, a length L31 of the sealing strip 40 is L2-0~2mm, and preferably L2-1~2mm; and at a short side edge of the composite slab base blank, a length L32 of the sealing strip 40 is W2-0~2mm, and preferably W2-1~2mm. Of course, the invention is not limited thereto.

Preferably, in the process of assembling blanks, a cladding material is placed centrally relative to a base material. For example, as described above, length and width of the cladding material and the base material satisfy L1=L2+90~150mm, W1=W2+90~150mm, and during assembling blanks, a distance WO1 from two side edges (i.e., long side edges) in a transverse direction of the cladding material to corresponding two side edges (i.e., long side edges) of the base material is equal, the distance WO1 is a half of W1-W2, and a distance WO2 from two side edges (i.e., short side edges) in a longitudinal direction of the cladding material to corresponding two side edges (i.e., short side edges) of the base material is also equal, the distance WO2 is a half of L1-L2.

Further, four side edges of the obtained composite slab base blank have a groove with a depth D enclosed by the base material 11, the sealing strip 40 and the base material 12. It can be understood that, the depth D depends on differences in length and width between the cladding material and the base material (such as a distance WO1 and a distance WO2), and the thickness T3 of the sealing strip 40. Through a control of the depth D, not only a weld cracking can be effectively avoided when the composite slab is rolled, but also a formation of a welding thermal crack due to a deeper penetration depth during a subsequent seal welding can be avoided, thereby affecting a seal welding quality of the composite slab.

Further, the sealing strip 40 at one side edge of the composite slab base blank is provided with a circular through hole, and in the process of assembling blanks, a round pipe is welded in the through hole. Wherein, the through hole may be formed before the gas shielded welding is carried out between the sealing strip 40 and the base material 11, as well as between he sealing strip 40 and the base material 12, or may be formed after the gas shielded welding is completed. All of these do not depart from a technical principle of the present application.

Preferably, the through hole is provided on the sealing strip 40 at a short side edge of the composite slab base blank.

Preferably, a diameter of the through hole is consistent with an outer diameter of the round pipe, and is 8~12mm; and a wall thickness of the round pipe is 1.2~2mm, and a length is 200~400mm.

In a preferred embodiment, the process of seal welding comprises: performing surfacing welding on the groove of four side edges of the composite slab base blank, and specifically adopting a submerged arc surfacing welding. It can be understood that, outside a surrounding frame formed by a sealing strip 40, a surfacing-welded filling layer 50 in a shape of a four-sided frame is formed by the seal welding process, see FIG. 2 and FIG. 3. The surfacing-welded filling layer 50 and the sealing strip 40 together constitute the four-sided frame of the composite slab, and the four-sided frame can seal the cladding materials between two base materials.

Preferably, a penetration depth of the surfacing-welded filling layer 50 is D, that is, is the same as the depth of the groove at a side edge of the composite slab base blank.

As a preferred manner, before welding, a flux is baked at 350°C for 2h, and then is kept warm at 150°C for 1h; and during a welding process, an interpass temperature is controlled to be 135-165°C, a welding current is 570-630A, a welding voltage is 28-32V, and a welding speed is 420-480mm/min. Thus, the submerged arc surfacing welding technology, in combination with the foregoing sealing strip wrapping and gas shielded welding, jointly realize a firm connection of four steel blanks, ensure a connection strength, avoid a cracking abnormality in the subsequent rolling process, and can further improve an interface bonding effect.

In addition, during the surfacing welding process, before each pass of welding construction, an attachment on a weld pass needs to be cleaned to keep the weld pass clean; and after welding is completed, a thermal insulation cotton is covered for thermal insulation.

In a preferred embodiment, the process of vacuumizing comprises: performing three times of vacuumizing and two times of vacuum breaking on an internal space of the composite slab, and finally keeping a vacuum degree of the internal space of the composite slab to be ≤10⁻²Pa.

Here, the internal space of the composite slab comprises a face-to-face gap between the cladding material and the base material, a face-to-face gap between one cladding material and another cladding material, an end face gap between the cladding material and the sealing strip, and the like. Specifically, the round pipe is in communication with the internal space of the composite slab, and three times of vacuumizing and two times of vacuum breaking are performed through the round pipe.

Further, the process of vacuumizing more specifically comprises:
first connecting a vacuum pump to the round pipe, performing a first vacuumizing on the internal space of the composite slab to a vacuum degree ≤10⁻²Pa, and then performing pressure maintaining for more than 4 hours; next, switching the round pipe to be connected to a nitrogen device, performing vacuum breaking on the composite slab, and charging N₂;
after that, connecting the vacuum pump to the round pipe again, performing a second vacuumizing on the composite slab to a vacuum degree ≤10⁻¹Pa, without pressure maintaining; next, switching the round pipe to be connected to the nitrogen device again, performing a second vacuum breaking on the composite slab, and charging N₂;
finally, connecting the vacuum pump to the round pipe again, and performing a third vacuumizing on the composite slab to a vacuum degree ≤10⁻²Pa.

Thus, an air in the space can be prevented from causing a surface oxidation at a composite interface in the subsequent heating process and the rolling process, thereby ensuring a composite interface bonding quality.

Further, the process of sealing, i.e., sealing an outlet of the composite slab, in a preferred embodiment of the present invention, the outlet is constituted by the round pipe, and can be implemented in an existing feasible manner in a steel field, for example, the round pipe is heated and clamped flat with a flame gun to achieve sealing, so as to obtain the composite slab.

Next, in an embodiment of the present invention, the process of heating, as described above, comprises: heating the composite slab in a heating furnace according to a five-stage mode of a preheating stage, a first heating stage, a second heating stage, a third heating stage and a soaking stage, a temperature of the preheating stage is ≤850°C, a temperature of the first heating stage is 1080±30°C, a temperature of the second heating stage is 1160±30°C, a temperature of the third heating stage is 1220±20°C, a temperature of the soaking stage is 1190±20°C, a residence time of the third heating stage is (0.25~0.35)×t min/mm, and a residence time of the soaking stage is 15min~30min. Thus, an intermediate layer of the composite slab is stainless steel cladding materials, and an upper layer and a lower layer are a carbon steel base material, a thermal conductivity, an expansion coefficient and other properties of the two materials are greatly different, and a large stress will be generated during the heating process. The heating process of this embodiment can better control a heating rate of the composite slab in each stage, ensure a uniform heating, thereby avoiding risks such as cracking, air leakage and the like, and thus laying a foundation for obtaining an excellent bonding interface.

In an embodiment of the present invention, the step of rolling, as described above, comprises:
rolling the composite slab upon exiting the heating furnace to obtain a large clad plate;
during the entire rolling process, transverse rolling is adopted for first n passes, and longitudinal rolling is adopted since the (n+1)th pass, and, a rolling reduction of the first pass is ≥25mm and a rolling temperature of the first pass is ≥1060°C, a width of a slab obtained from rolling of the n-th pass is Wt + 0~40mm, Wt is a target width of the large clad plate, and a rolling temperature of the n-th pass is ≥1030°C;
between the n-th pass and the (n+1)th pass and between a (n+2)th pass and a (n+3)th pass, water-cooling the slab back and forth once in 6 groups of headers, a cooling water amount of an upper header and a lower header of each group of headers is 120~180m³/h and 160~220m³/h, and a roller table speed is 0.8~1.2m/s; preferably, more preferably, a cooling water amount of the upper header and the lower header of each group of headers is 150m³/h and 200m³/h, and a roller table speed is 1m/s;
rolling reductions from the (n+1)th pass to an (n+3)th pass are all ≥40mm, and a rolling temperature of the (n+1)th pass is ≥950°C; preferably, a rolling reduction of the (n+2)th pass is ≥42mm;
up to an m-th pass, a rolling temperature is ≥900°C, and rolling is carried out until a slab thickness reaches 2.5~3.5 times a target thickness of the large clad plate;
then performing water cooling until a surface temperature of the billet is reduced to below 840°C;
and then performing a second stage of rolling until the slab thickness is the target thickness of the large clad plate, to complete the entire rolling process, wherein a rolling temperature of a first pass and a last pass of the second stage of rolling is 810°C~840°C and 780~810°C.

Thus, the rolling process of this embodiment, on the one hand, can ensure a deformation penetration effect of a core part, is beneficial to a combination of the cladding material and the base material, and improves an interface bonding rate and a bonding strength of the base layer and the cladding layer of the final clad plate; on the other hand, ensures relevant mechanical properties, a corrosion resistance and a low-temperature impact toughness of the large clad plate, and avoids a performance degradation caused by a combination of the base material and the cladding material.

Further, as a preferred first embodiment, the process of cooling comprises:
the large clad plate obtained by rolling enters an ultra-rapid cooling system for cooling, a cooling starting temperature is ≥730°C, a cooling rate is 6~20°C/s, and a final cooling temperature is 480~590°C;
after leaving the ultra-rapid cooling system, the large clad plate is air-cooled on a cooling bed until room temperature.

As a more preferred second embodiment, the process of cooling comprises:
the large clad plate obtained by rolling enters an ultra-rapid cooling system for cooling: the ultra-rapid cooling system has 24 groups of cooling headers arranged at an interval of 1m along a roller table, a cooling distance of each group of cooling headers is 1m, when the large clad plate passes through the ultra-rapid cooling system, the operation of all 24 groups of the cooling headers is controlled in a periodic pattern consisting of N consecutive activated groups followed by M consecutive deactivated groups of cooling headers repeated as necessary, a cooling water pressure is 0.15~0.30MPa, a cooling rate is 3~15°C/s, and a final cooling temperature is 380~590°C; wherein N takes a value of 2, 3 or 4, and M takes a value of 2, 3 or 4;
after leaving the ultra-rapid cooling system, the large clad plate is air-cooled on the cooling bed until room temperature.

In the cooling process of the second embodiment, when the large clad plate passes through the ultra-rapid cooling system, the large clad plate moves in alternately turned-on cooling headers and turned-off cooling headers, in this way, each part of the large clad plate will be cooled, re-heated, cooled, re-heated... and so on, until the large clad plate leaves the ultra-rapid cooling system. In a cycle of cooled-reheated, the carbon steel base material continuously undergoes a phase transformation and a self-tempering effect, and the phase transformation gradually penetrates to a core part until the entire carbon steel base material completes the phase transformation. This intermittent cooling process is different from a conventional reciprocating cooling, reheating and self-tempering of the conventional reciprocating cooling occur after a surface layer or a near-surface layer has completed phase transformation, a temperature difference or a cooling rate difference between the surface layer and a core part is large, and a structure and a mechanical property are also greatly different; while the intermittent cooling process of the present embodiment is that, at a same moment, the large clad plate has some parts in a cooling state and some parts in a reheating/self-tempering state, and, each part of the large clad plate alternately performs cooling and reheating/self-tempering with time, so that differences in a temperature, a cooling rate, a structure, a performance and the like between a surface layer and a core part of the large clad plate are small, for example, a Vickers hardness difference in a thickness direction of the base layer of the finally obtained large clad plate is ≤10, a strength difference among a head, a middle and a tail is ≤40MPa, and a strength difference at each position of a whole plate is ≤40MPa. Furthermore, a plate shape of the clad plate can be further improved by the intermittent cooling, that is, an unflatness is low, and an excellent plate shape can be obtained even if a cooling on the cooling bed is performed directly without straightening after cooling is completed.

Further preferably, in the process of cooling: a thickness of the large clad plate is below 54mm, for example, when the thickness is 10~54mm, a roller table speed of the ultra-rapid cooling system is 0.4~0.8m/s, the large clad plate passes through the ultra-rapid cooling system once, and then leaves the ultra-rapid cooling system. In addition, a control manner of 24 groups of cooling headers may be: 1st~4th groups of cooling headers are turned on, 5th~6th groups of cooling headers are not turned on, 7th~8th groups of cooling headers are turned on, 9th~10th groups of cooling headers are not turned on, 11th~12th groups of cooling headers are turned on, 13th~14th groups of cooling headers are not turned on, 15th~16th groups of cooling headers are turned on, 17th~18th groups of cooling headers are not turned on, 19th~20th groups of cooling headers are turned on, 21st~22nd groups of cooling headers are not turned on, and 23rd~24th groups of cooling headers are turned on.

In the process of cooling: the thickness of the large clad plate is >54mm, for example, when the thickness is >54mm and <70mm, the roller table speed of the ultra-rapid cooling system is above 0.2m/s and less than 0.6m/s, the large clad plate passes through the ultra-rapid cooling system once, and then leaves the ultra-rapid cooling system. Thus, a plate shape control and a uniformity control of a thick stainless steel clad plate are realized, and a production difficulty of an existing thick stainless steel clad plate is overcome. In addition, the control manner of 24 groups of cooling headers may be: 1st~4th groups of cooling headers are turned on, 5th~8th groups of cooling headers are not turned on, 9th~12th groups of cooling headers are turned on, 13th~16th groups of cooling headers are not turned on, 17th~20th groups of cooling headers are turned on, 21st~22nd groups of cooling headers are not turned on, and 23rd~24th groups of cooling headers are turned on.

In the process of cooling: when the thickness of the large clad plate is ≥70mm, for example, when the thickness is 70mm~110mm, the roller table speed of the ultra-rapid cooling system is 0.4~0.9m/s, the large clad plate first enters from an inlet of the ultra-rapid cooling system in a forward direction, and when a head of the large clad plate reaches the 24th group of cooling headers, the roller table reverses, the large clad plate passes through the ultra-rapid cooling system in a reverse direction and leaves from the inlet of the ultra-rapid cooling system. Thus, a plate shape control and a uniformity control of an extra-thick stainless steel clad plate are realized, and a production difficulty of an existing extra-thick stainless steel clad plate is overcome. In addition, the control manner of 24 groups of cooling headers may be: 1st~4th groups of cooling headers are turned on, 5th~8th groups of cooling headers are not turned on, 9th~12th groups of cooling headers are turned on, 13th~16th groups of cooling headers are not turned on, 17th~20th groups of cooling headers are turned on, 21st~22nd groups of cooling headers are not turned on, and 23rd~24th groups of cooling headers are turned on.

As a preferred embodiment, the process of cutting comprises: cutting the four side edges of the large clad plate to remove a portion outside the sealing strip, , thereby separating the large clad plate into an upper small clad plate and a lower small clad plate.

Regarding "a portion outside the sealing strip", that is, after the foregoing rolling process, a portion of an edge of the large clad plate converted from the sealing strip 40 and the surfacing-welded filling layer 50 in the composite slab mentioned above. Thus, by removing the portion, the stainless steel cladding layer is exposed, and without a connecting function of the portion of the edge, the large clad plate is automatically separated into an upper small clad plate and a lower small clad plate.

As a preferred embodiment, the process of straightening comprises: performing sizing, leveling and cold straightening on small clad plates to obtain two finished single-sided stainless steel clad plates.

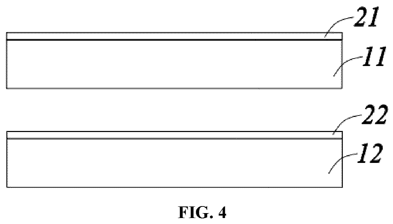

Referring to FIG. 4, corresponding two finished single-sided stainless steel clad plates are shown. Each stainless steel clad plate is composed of a cladding layer and a base layer, the cladding layer is obtained from an original cladding material through rolling, and the base layer is obtained from an original base material through rolling, in view of this, in FIG. 4, a reference numeral of the original cladding material is still marked for the cladding layer, and a reference numeral of the original base material is also still marked for the base layer.

Next, an embodiment of the present invention also provides a stainless steel clad plate, and the stainless steel clad plate is prepared by the preparation method described in any one of the foregoing embodiments. A base layer of the stainless steel clad plate is a carbon steel, and a cladding layer is a stainless steel.

A total thickness of the stainless steel clad plate is 15~39mm, a thickness of the base layer is 12~36mm, and a thickness of the cladding layer is 1~5mm.

Specifically, sampling is performed on a single-sided stainless steel clad plate of an embodiment of the present invention according to GB/T 2975-Steel and Steel Products-〈〈Location and preparation of samples and test pieces for mechanical testing〉〉, and:
in terms of an interface bonding quality, a tensile test is performed on a clad plate according to GB/T 6396- 〈〈Mechanical and technological properties test methods of clad steel plates〉〉 , a composite interface bonding rate of the clad plate is 100%, and a shear strength is ≥360MPa, which is far higher than that of an existing clad plate;
in terms of a plate shape, detection is performed according to GB/T 709- 〈〈Hot-rolled steel plates and strip-Dimensions, shape and tolerances〉〉 , an unflatness of the clad plate is ≤3mm/m, and even the unflatness is ≤2mm/m;
in terms of a uniformity, a tensile test is performed according to GB/T 6396-(Mechanical and technological properties test methods of clad steel plates) and GB/T 228.1- 〈〈Metallic materials-Tensile testing-Part 1: Method of test at room temperature〉〉 , a Vickers hardness difference in a thickness direction of the base layer of the clad plate is≤10, a strength difference among a head, a middle and a tail is ≤40MPa, and a strength difference at each position of a whole plate is ≤40MPa;
in terms of a low-temperature impact toughness, a test is performed according to GB/T 6396- 〈〈Mechanical and technological properties test methods of clad steel plates〉〉 and GB/T 229- 〈〈Metallic materials-Charpy pendulum impact test method〉〉 , a 0°C impact energy of the clad plate is ≥240J, a -20°C impact energy is ≥200J, and a - 40°C impact energy is ≥150J.

The detailed description listed above is only a specific description of feasible embodiments of the present invention, and is not intended to limit a protection scope of the present invention. Any equivalent embodiment or change made without departing from a technical spirit of the present invention should be included in the protection scope of the present invention.

The beneficial effects of the present invention are further illustrated below by a plurality of examples, and of course, these examples are only a part of, but not all of, many varied embodiments included in the present invention.

Examples 1~4 respectively provide a single-sided stainless steel clad plate, comprising a carbon steel base layer and a stainless steel cladding layer, a thickness of the clad plate, a thickness and a material of the base layer, and a thickness and a material of the cladding layer of these examples are respectively shown in Table 1. Wherein, specific chemical compositions of each material in Table 1 are disclosed in an appendix to Table 1.

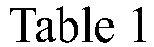

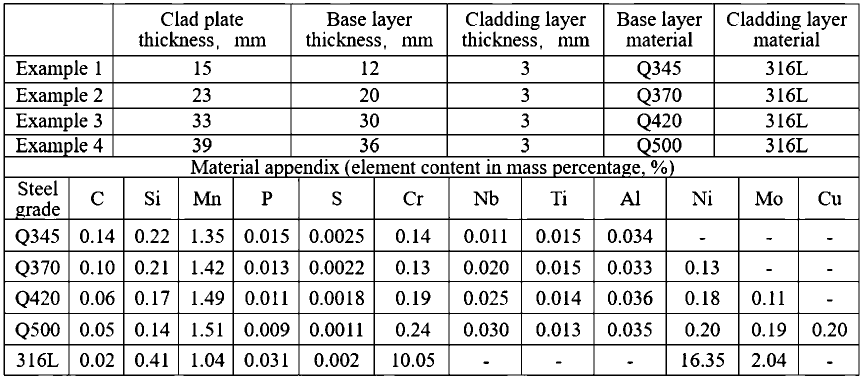

Further, a clad plate of each example is sampled and tested, an interface bonding rate of each example is 100%, an inward bending of 180° is qualified (no crack), an outward bending of 180° is qualified (no crack), and after being boiled in a sulfuric acid-copper sulfate solution for 20h and bent by 180°, a cladding layer has no intergranular corrosion crack. In addition, other performance detection results are shown in Table 2.

**Table 2**

| | Yield strength, MPa | Tensile strength, MPa | Elongation after fracture, % | Shear strength, MPa | -40°C impact energy, J | Unflatness, mm/m | Vickers hardness difference | Strength difference among head, middle and tail. MPa | Whole plate strength difference, MPa |
|---|---|---|---|---|---|---|---|---|---|
| Example 1 | 378 | 519 | 29 | 357 | 245 | 2 | 8 | 23 | 27 |
| Example 2 | 415 | 540 | 30 | 391 | 259 | 2 | 8 | 26 | 28 |
| Example 3 | 478 | 581 | 27 | 429 | 302 | 1 | 8 | 26 | 31 |
| Example 4 | 558 | 672 | 25 | 451 | 299 | 1 | 9 | 30 | 35 |

A preparation method of each of the above examples is described below according to processes.

### <Preparing Steel Blanks Process>

Prepare two base materials of identical dimensions and two cladding materials of identical dimensions, with the materials of the base materials and cladding materials corresponding to those of the base layer and cladding layer of the clad plate respectively, as shown in Table 1; the dimensions of base materials and cladding materials for each example are shown in Table 3.

**Table 3**

| | Length (mm) × Width (mm) × Thickness (mm) | | | |
|---|---|---|---|---|
| | Base material | Cladding material | Long sealing strip | Short sealing strip |
| Example 1 | 2800×2000×96 | 2680×1880×24 | 2679×47×15 | 1879×47×15 |
| Example 2 | 2800×2000×140 | 2680×1880×21 | 2679×41×15 | 1879x41x15 |
| Example 3 | 2800×2000×210 | 2680×1880×21 | 2679×41×15 | 1879×41×15 |
| Example 4 | 2800×2000×252 | 2680×1880×21 | 2679×41×15 | 1879×41×15 |

To-be-cladded surfaces of each base material and each cladding material are subjected to a grinding and polishing treatment; after the grinding and polishing treatment, the to-be-cladded surfaces show no oxide scale, expose metallic luster, and have surface roughness Ra<5µm.

### <Coating Release agent>

Coat release agent on the non-bonding surface of one of the two cladding materials.

For Examples 1 and 3, the release agent used is: a coating liquid containing silicon oxide and magnesium oxide, with a mass ratio of silicon oxide to magnesium oxide of 3:1. The total amount of release agent coating is 140mg/m². After coating the release agent, the coated cladding material is placed in a trolley furnace for heating and drying at 350°C for 40min.

For Examples 2 and 4, the release agent used is: composition by weight ratio of 25~35% silicon nitride + 5~10% thermosetting amino resin + 55~70% water. The coating thickness of release agent is 0.35mm. After coating the release agent, the coated cladding material is heated and dried at 100~250°C for 20~40min.

### <Assembling Blanks Process>

In each example, a base material A, a cladding material A, a cladding material B are a base material B are sequentially stacked from bottom to top; wherein the to-be-cladded surface of base material A contacts the to-be-cladded surface of cladding material A, the to-be-cladded surface of base material B contacts the to-be-cladded surface of cladding material B, the release agent is between cladding materials A and B, and the two cladding materials are placed centrally relative to the two base materials (i.e., WO1=60mm, WO2=60mm as mentioned earlier).

After stacking the base material A, the cladding material A, the cladding material B and the base material B, a four-column hydraulic machine is used to apply pressure to the opposing surfaces of the two base materials, with pressure ≥500 tons.

Each example prepares two long sealing strips and two short sealing strips, with dimensions as shown in Table 3 above. The four sealing strips surround the two cladding materials, with the upper edge of the strips welded to base material B and the lower edge welded to base material A. Additionally, a hole with 10mm diameter is machined in the middle of one short sealing strip, and a circular pipe with outer diameter matching the hole diameter, wall thickness of 1.2~2mm, and length of 200~400mm is welded in this hole.

### <Seal Welding Process - Vacuumizing Process - Sealing Process>

For the composite slab base blank prepared in the previous assembling blanks process, submerged arc surfacing welding is used to fill the grooves on the four sides of the composite slab base blank, with the weld penetration depth matching the groove depth.

Then, perform three times of vacuumizing and two times of vacuum breaking on the internal space of the composite slab, finally maintaining the vacuum degree of the internal space at ≤10⁻²Pa.

Afterwards, seal the circular pipe to obtain the composite slab.

### <Heating Process>

### <Heating Process>

In each example, the composite slab is heated in the heating furnace in five stages comprising preheating stage, first heating stage, second heating stage, third heating stage and soaking stage, with specific temperatures and times as shown in Table 4.

**Table 4**

| | Preheating stage temperature, °C | First heating stage temperature, °C | Second heating stage temperature, °C | Third heating stage | | Soaking stage | |
|---|---|---|---|---|---|---|---|
| | | | | Temperature, °C | Residence time, min | Temperature, °C | Residence time min |
| Example 1 | 800 | 1080 | 1160 | 1220 | 65 | 1190 | 15 |
| Example 2 | 800 | 1080 | 1150 | 1220 | 100 | 1190 | 20 |
| Example 3 | 800 | 1070 | 1140 | 1220 | 140 | 1200 | 25 |
| Example 4 | 800 | 1060 | 1120 | 1220 | 165 | 1200 | 30 |

### <Rolling Process>

roll the composite slab from the heating furnace to obtain a large clad plate; during an entire rolling process, transverse rolling is adopted for first n passes, and longitudinal rolling is adopted since the (n+1)th pass, a width of a slab obtained from rolling of an n-th pass is Wt + 0~40mm, Wt is a target width of the large clad plate; between the n-th pass and the (n+1)th pass, and between a (n+2)th pass and a (n+3)th pass, water-cooling the slab back and forth once in 6 groups of headers, a cooling water amount of an upper header and an lower header of each group of headers is 120~180m³/h and 160~220m³/h, and a roller table speed is 0.8~1.2m/s; rolling reductions from the (n+1)th pass to an (n+3)th pass are all ≥40mm; up to an m-th pass, rolling is carried out until a slad thickness reaches 2.5~3.5 times a target thickness of the large clad plate, then performing water cooling until a surface temperature of the slab is reduced to below 840°C; and then performing a second stage of rolling until the slab thickness is the target thickness of the large clad plate, to complete the entire rolling process; other parameters are shown in Table 5.

**Table 5**

| | Transverse rolling | | | | Longitudinal rolling | | | | Second stage of rolling | |
|---|---|---|---|---|---|---|---|---|---|---|
| | Temperature of first pass, °C | Reduction of first pass, mm | N Value | Temperature of n-th pass, °C | Temperature of (n+1)th pass, °C | Reduction of (n+2)th pass, mm | M Value | Temperature of m-th pass, °C | Temperature of first pass, °C | Temperature of last pass, °C |
| Example 1 | 1080 | 25 | 1 | 1050 | 950 | 40 | 5 | 905 | 835 | 810 |
| Example 2 | 1090 | 26 | 2 | 1050 | 950 | 40 | 6 | 905 | 830 | 805 |
| Example 3 | 1100 | 27 | 3 | 1060 | 960 | 42 | 9 | 910 | 825 | 800 |
| Example 4 | 1100 | 27 | 3 | 1060 | 960 | 42 | 9 | 910 | 815 | 790 |

### <Cooling Process>

Using an ultra-rapid cooling system with 24 groups of cooling headers arranged at intervals of 1m along the roller table, each group of cooling headers has a cooling distance of 1m.

For Examples 1 and 2, the large clad plates are cooled in the ultra-rapid cooling system, with cooling starting temperature of 770°C, cooling rate of 12°C/s, and final cooling temperature of 550°C. After leaving the ultra-rapid cooling system, the large clad plates are air-cooled on a cooling bed until room temperature.

For Examples 3 and 4, the large clad plates are cooled in the ultra-rapid cooling system: when passing through the ultra-rapid cooling system, the operation of all 24 groups of cooling headers is controlled in a periodic pattern consisting of N consecutive activated groups followed by M consecutive deactivated groups of cooling headers, repeated as necessary, with cooling water pressure of 0.15~0.30MPa, cooling rate of 3~15°C/s, and cooling end temperature of 380~590°C; where N takes the value of 2, 3 or 4, and M takes the value of 2, 3 or 4. After leaving the ultra-rapid cooling system, the large clad plates are air-cooled on a cooling bed until room temperature. For each example, specific parameters such as large clad plate thickness, cooling water pressure, cooling rate, final cooling temperature, roller table speed, number of passes through the ultra-rapid cooling system (abbreviated as water-cooling passes), cooling header control method, etc., are shown in Table 6.

**Table 6**

| | Large clad plate thickness mm | Cooling water pressure MPa | Cooling rate °C/s | Final cooling temperature °C | the activated headers | Roller table speed m/s | water-cooling passes |
|---|---|---|---|---|---|---|---|
| Example 3 | 66 | 0.22 | 4-10 | 480 | 1-4, 9-12, 17-20 23-24 | 0.55 | unidirectional 1 time |
| Example 4 | 78 | 0.25 | 3-8 | 420 | 1-4, 9-12, 17-20 23-24 | 0.60 | back and forth 1 time |

### <Cutting Process - Straightening Process>

Cut the four sides of the large clad plate to remove the portions outside the sealing strips, thereby separating the large clad plate into upper and lower small clad plates.

Afterwards, perform sizing, leveling and cold straightening on the small clad plates to obtain the stainless steel clad plates for each example (such as the clad plates mentioned in Tables 1 and 2).

From the above, it can be seen that using the preparation method provided by the preferred embodiments of the present application, through technical improvements in the heating process and rolling process, the produced stainless steel clad plate, compared with prior art, not only ensures excellent mechanical properties and corrosion resistance, but also improves interface bonding performance, greatly increasing interface bonding strength; furthermore, through other preferred solutions such as the cooling process, assembling blanks process, vacuumizing process, etc., the clad plate can also achieve excellent plate shape, uniformity and impact toughness.

## Claims

1. A preparation method of a stainless steel clad plate, **characterized in that**, the method comprises the following steps:
preparing a composite slab with a thickness t by preparing steel blanks, coating release agent, assembling blanks, seal welding, vacuumizing, and sealing; the composite slab comprises an upper base material, a lower base material, an intermediate cladding material, and a four-sided frame sealing the intermediate cladding material between the upper base material and the lower base material;
heating the composite slab in a heating furnace according to a five-stage mode of a preheating stage, a first heating stage, a second heating stage, a third heating stage and a soaking stage, a temperature of the preheating stage is ≤850°C, a temperature of the first heating stage is 1080±30°C, a temperature of the second heating stage is 1160±30°C, a temperature of the third heating stage is 1220±20°C, a temperature of the soaking stage is 1190±20°C, a residence time of the third heating stage is (0.25~0.35)×t min/mm, and a residence time of the soaking stage is 15min~30min;
rolling the composite slab from the heating furnace to obtain a large clad plate; during an entire rolling process, transverse rolling is adopted for first n passes, and longitudinal rolling is adopted since the (n+1)th pass, and, a rolling reduction of the first pass is ≥25mm and a rolling temperature of the first pass is ≥1060°C, a width of a slab obtained from rolling of a n-th pass is Wt + 0~40mm, Wt is a target width of the large clad plate, and a rolling temperature of the n-th pass is ≥1030°C; between the n-th pass and the (n+1)th pass, and between a (n+2)th pass and a (n+3)th pass, water-cooling the slab back and forth once in 6 groups of headers, a cooling water amount of an upper header and an lower header of each group of headers is 120~180m³/h and 160~220m³/h, and a roller table speed is 0.8~1.2m/s; rolling reductions from the (n+1)th pass to a (n+3)th pass are all ≥40mm, and a rolling temperature of the (n+1)th pass is ≥950°C; up to an m-th pass, a rolling temperature is ≥900°C, and rolling is carried out until a slab thickness reaches 2.5~3.5 times a target thickness of the large clad plate, then performing water cooling until a surface temperature of the slab is reduced to below 840°C; and then performing a second stage of rolling until the slab thickness is the target thickness of the large clad plate, to complete the entire rolling process, a rolling temperature of a first pass and a last pass of the second stage of rolling is 810°C~840°C and 780~810°C;
cooling, cutting, and straightening the obtained large clad plate to obtain a stainless steel clad plate product.

2. The preparation method of a stainless steel clad plate according to claim 1, **characterized in that**, a rolling reduction of the (n+2)th pass is ≥42mm.

3. The preparation method of a stainless steel clad plate according to claim 1, **characterized in that**, a cooling process in the step of "cooling, cutting, and straightening the obtained large clad plate to obtain a stainless steel clad plate product" comprises:
the large clad plate obtained by rolling enters an ultra-rapid cooling system for cooling, a cooling starting temperature is ≥730°C, a cooling rate is 6~20°C/s, and a final cooling temperature is 480~590°C;
after leaving the ultra-rapid cooling system, the large clad plate is air-cooled on a cooling bed until room temperature.

4. The preparation method of a stainless steel clad plate according to claim 1, **characterized in that**, a cooling process in the step of "cooling, cutting, and straightening the obtained large clad plate to obtain a stainless steel clad plate product" comprises:
the large clad plate obtained by rolling enters an ultra-rapid cooling system for cooling:
the ultra-rapid cooling system has 24 groups of cooling headers arranged at an interval of 1m along a roller table, a cooling distance of each group of cooling headers is 1m, when the large clad plate passes through the ultra-rapid cooling system, the operation of all 24 groups of the cooling headers is controlled in a periodic pattern consisting of N consecutive activated groups followed by M consecutive deactivated groups of cooling headers, repeated as necessary, a cooling water pressure is 0.15~0.30MPa, a cooling rate is 3~15°C/s, and a final cooling temperature is 380~590°C; wherein N takes a value of 2, 3 or 4, and M takes a value of 2, 3 or 4.

5. The preparation method of a stainless steel clad plate according to claim 4, **characterized in that**, a cooling process in the step of "cooling, cutting, and straightening the obtained large clad plate to obtain a stainless steel clad plate product" comprises:
after leaving the ultra-rapid cooling system, the large clad plate is air-cooled on a cooling bed until room temperature.

6. The preparation method of a stainless steel clad plate according to claim 4, **characterized in that**, a thickness of the large clad plate is below 54mm, a roller table speed of the ultra-rapid cooling system is 0.4~0.8m/s, the large clad plate passes through the ultra-rapid cooling system once, and then leaves the ultra-rapid cooling system.

7. The preparation method of a stainless steel clad plate according to claim 4, **characterized in that**, a thickness of the large clad plate is >54mm, a roller table speed of the ultra-rapid cooling system is above 0.2m/s and less than 0.6m/s, the large clad plate passes through the ultra-rapid cooling system once, and then leaves the ultra-rapid cooling system.

8. The preparation method of a stainless steel clad plate according to claim 4, **characterized in that**, a thickness of the large clad plate is ≥70mm, a roller table speed of the ultra-rapid cooling system is 0.4~0.9m/s, the large clad plate first enters from an inlet of the ultra-rapid cooling system in a forward direction, and when a head of the large clad plate reaches the 24th group of cooling headers, the roller table reverses, the large clad plate passes through the ultra-rapid cooling system in a reverse direction and leaves from the inlet of the ultra-rapid cooling system.

9. The preparation method of a stainless steel clad plate according to claim 1, **characterized in that**, a process of vacuumizing in the step of "preparing a composite slab with a thickness t by preparing steel blanks, coating release agent, assembling blanks, seal welding, vacuumizing, and sealing" comprises:
performing three times of vacuumizing and two times of vacuum breaking on an internal space of a composite slab, and finally keeping a vacuum degree of the internal space of the composite slab to be ≤10⁻²Pa.

10. The preparation method of a stainless steel clad plate according to claim 9, **characterized in that**, the step of "performing three times of vacuumizing and two times of vacuum breaking on an internal space of a composite slab, and finally keeping a vacuum degree of the internal space of the composite slab to be ≤10-2Pa" comprises:
first performing vacuumizing on the internal space of the composite slab to a vacuum degree ≤10⁻²Pa, and then performing pressure maintaining for more than 4h; next, performing vacuum breaking on the composite slab, and charging N₂;
after that, performing vacuumizing on the composite slab to a vacuum degree ≤10⁻¹Pa, without pressure maintaining; next, performing vacuum breaking on the composite slab, and charging N₂;
finally, performing a third vacuumizing on the composite slab to a vacuum degree ≤10⁻²Pa.

11. The preparation method of a stainless steel clad plate according to claim 1, **characterized in that**, in the composite slab obtained in the step of "preparing a composite slab with a thickness t by preparing steel blanks, coating release agent, assembling blanks, seal welding, vacuumizing, and sealing":
the intermediate cladding material comprises two cladding materials arranged in a stacked manner;
the four-sided frame comprises a sealing strip surrounding four side edges of the intermediate base material, and a surfacing-welded filling layer located in a groove enclosed by the upper base material, the lower base material and the sealing strip.

12. The preparation method of a stainless steel clad plate according to claim 11, **characterized in that**, an upper edge of the sealing strip and the upper base material, and a lower edge of the sealing strip and the lower base material, are respectively welded together by a gas shielded welding.

13. The preparation method of a stainless steel clad plate according to claim 11, **characterized in that**, a process of coating release agent in the step of "preparing a composite slab with a thickness t by preparing steel blanks, coating release agent, assembling blanks, seal welding, vacuumizing, and sealing" comprises:
coating release agent on at least one of a contact surface of two cladding materials.

14. The preparation method of a stainless steel clad plate according to claim 13, **characterized in that**, an release agent used is a coating liquid containing a silicon oxide and a magnesium oxide, wherein a mass ratio of the silicon oxide to the magnesium oxide is 3:1.

15. The preparation method of a stainless steel clad plate according to claim 14, **characterized in that**, a total amount of the release agent coated between two cladding materials is 18~22y mg/m², and y is a ratio of a sum of thicknesses of the two cladding materials and two base materials to a thickness of a large clad plate.

16. The preparation method of a stainless steel clad plate according to claim 13, **characterized in that**, a composition of release agent used is, by weight ratio: 25~35% of a silicon nitride, 5~10% of a thermosetting amino resin, and 55~70% of a water.

17. The preparation method of a stainless steel clad plate according to claim 16, **characterized in that**, a total thickness of release agent coated between two cladding materials is 0.2~0.5mm.

18. The preparation method of a stainless steel clad plate according to claim 1, **characterized in that**, in a process of assembling blanks in the step of "preparing a composite slab with a thickness t by preparing steel blanks, coating release agent, assembling blanks, seal welding, vacuumizing, and sealing", the upper base material, the lower base material and the intermediate cladding material are stacked, and then a four-column hydraulic machine is used to pressurize back-to-back surfaces of two base materials, and a pressure is ≥500 tons.

19. A stainless steel clad plate, **characterized in that**, a shear strength of a bonding interface of the stainless steel clad plate is ≥360MPa, and during a preparation process of the stainless steel clad plate, a composite slab composed of an upper base material, a lower base material, and an intermediate cladding material is heated, and then rolled into a large clad plate;
in a rolling process, transverse rolling is adopted for first n passes, and longitudinal rolling is adopted since the (n+1)th pass, and, a rolling reduction of the first pass is ≥25mm and a rolling temperature of the first pass is ≥1060°C, a width of a slab obtained from rolling of a n-th pass is Wt + 0~40mm, Wt is a target width of the large clad plate, and a rolling temperature of the n-th pass is ≥1030°C; between the n-th pass and the (n+1)th pass, and between a (n+2)th pass and a (n+3)th pass, water-cooling the slab back and forth once in 6 groups of headers, a cooling water amount of an upper header and an lower header of each group of headers is 120~180m³/h and 160~220m³/h, and a roller table speed is 0.8~1.2m/s; rolling reductions from the (n+1)th pass to a (n+3)th pass are all ≥40mm, and a rolling temperature of the (n+1)th pass is ≥950°C; up to an m-th pass, a rolling temperature is ≥900°C, and rolling is carried out until a slab thickness reaches 2.5~3.5 times a target thickness of the large clad plate, then performing water cooling until a surface temperature of the slab is reduced to below 840°C; and then performing a second stage of rolling until the slab thickness is the target thickness of the large clad plate, to complete an entire rolling process, a rolling temperature of a first pass and a last pass of the second stage of rolling is 810°C~840°C and 780~810°C.

20. The stainless steel clad plate according to claim 19, **characterized in that**, a base layer of the clad plate is a carbon steel, and a cladding layer is a stainless steel.
